# NOUVEAU FASCICULE DE BREVET EUROPEEN

(11) **EP 3 606 817 B2**
(45) Date de publication et mention de la décision concernant l'opposition: **13.12.2023**
(45) Mention de la délivrance du brevet: 28.04.2021
(21) Numéro de dépôt: 18709997.3
(22) Date de dépôt: 05.03.2018
(51) Int. Cl.: B64D 11/00, B64D 11/06

(54) **DISPOSITIF DE FERMETURE D'UN PASSAGE ENTRE DEUX UNITÉS DE SIÈGES**
DURCHGANGSSPERRE ZWISCHEN NEBENEINANDER ANGEORDNETEN SITZEN
DEVICE FOR CLOSING A PASSAGE BETWEEN TWO SEAT UNITS

(30) Priorité: 04.04.2017 US 201762481224 P
(43) Date de publication de la demande: 12.02.2020
(73) Titulaire: Safran Seats, 78370 Plaisir (FR)
(72) Inventeur: BONNEFOY, Bastien, 36100 Issoudun (FR); HERAULT, Patrick, 18160 Saint Hilaire En Lignieres (FR)
(74) Mandataire: Marconnet, Sébastien
(86) Numéro de dépôt international: PCT/EP2018/055333
(87) Numéro de publication internationale: WO 2018/184778

(56) Documents cités:
- WO-A1-2004/038154
- WO-A1-2014/155353
- WO-A1-2015/167949

## Description

La présente invention porte sur une unité de siège. L'invention trouve une application particulièrement avantageuse dans le domaine des aéronefs.

Les sièges de type "Classe Affaires" offrent aux passagers différentes positions de confort, d'une position "assise" jusqu'à une position "couchée", dans laquelle le siège définit un plan de couchage sensiblement horizontal pour que le passager puisse s'allonger.

Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

Le siège est généralement constitué notamment du dossier et d'une assise et est susceptible de comprendre un repose-jambes et/ou un repose-pieds, pouvant être fixes ou liés à une cinématique du siège.

Certains agencements de sièges pour cabine d'avion de type "Classe Affaires" comprennent un passage, disposé entre deux sièges agencés l'un derrière l'autre selon un axe longitudinal de la cabine de l'avion, permettant un accès direct à un couloir de circulation pour tous les passagers. Les passagers peuvent ainsi accéder facilement au couloir de circulation, notamment lorsque le siège est en position "couchée".

De ce fait, lorsqu'un passager ou un personnel de bord marche dans le couloir de circulation situé latéralement par rapport au siège, notamment en direction de l'arrière de la cabine de l'avion, il est susceptible d'être en contact visuel direct avec le passager assis dans le siège. Une telle situation peut apporter un sentiment d'inconfort pour le passager assis, en ce sens qu'il ressent une absence d'intimité.

Le document EP3225548 décrit un dispositif de fermeture d'un passage entre deux sièges, agencés l'une derrière l'autre selon un axe longitudinal de la cabine de l'avion, comportant une porte montée coulissante entre une position stockée, dans laquelle la porte laisse le passage dégagée, et une position déployée, dans laquelle la porte obture le passage. Une telle configuration permet de définir un espace intérieur clos autour du siège procurant un sentiment d'intimité au passager. Notamment, une telle configuration selon l'état de la technique permet au passager assis sur le siège d'éviter d'être à la vue directe des autres passagers et/ou personnels de bord marchant dans le couloir de circulation.

En cas de dysfonctionnement du dispositif de fermeture décrit dans le document EP3225548, et dans le document WO2004038154A1 aussi, le passager peut faire pivoter la porte suivant une charnière verticale pour dégager l'espace entre les sièges et accéder au couloir de circulation. Toutefois, dans une telle configuration, la porte est susceptible d'entraver le passage lorsqu'elle est pivotée par rapport à sa position habituelle. En outre, le dispositif de fermeture décrit dans le document EP3225548 requiert que la porte soit suffisamment déployée afin que la charnière dépasse d'un logement de stockage, ce qui n'est pas toujours possible en cas de dysfonctionnement important du dispositif de fermeture.

L'invention vise à remédier efficacement à ces inconvénients en proposant une unité de siège selon la revendication 1.

L'invention permet ainsi, en autorisant le coulissement de la paroi de fermeture lors d'un déverrouillage du système, d'éviter d'entraver le chemin des passagers en cas de procédure d'évacuation. En outre, l'invention peut être mise en oeuvre quelle que soit la longueur déployée de la paroi de fermeture, ce qui facilite sa mise en œuvre en conditions d'urgence.

Selon une réalisation, le système de verrouillage comporte au moins un organe de retenue disposé entre la zone de maintien et la zone de dégagement.

Selon une réalisation, l'organe de retenue présente un seuil d'effort de retenue supérieur à un effort nécessaire pour déplacer la paroi de fermeture et/ou le moyen de support suivant la glissière lorsque le système de verrouillage est à l'état verrouillé.

Selon une réalisation, l'organe de retenue est constitué par une bille montée sur un ressort.

Selon une réalisation, une butée d'arrêt est prévue dans la paroi de fermeture.

Selon une réalisation, la butée d'arrêt est apte à prendre
- une position de blocage, dans laquelle la butée d'arrêt vient en appui contre une partie fixe par rapport au moyen de support pour éviter un déplacement relatif de la paroi de fermeture par rapport au moyen de support, et
- une position de déblocage, dans laquelle la butée d'arrêt est dégagée de la partie fixe par rapport au moyen de support pour autoriser un déplacement relatif de la paroi de fermeture par rapport au moyen de support.

Selon une réalisation, un moyen de préhension, notamment une poignée, en particulier situé sur un coin de la paroi de fermeture, est apte à commander un déplacement de la butée d'arrêt.

Selon une réalisation, la paroi de fermeture est apte à venir en appui par gravité contre un fond du logement lorsque le système de verrouillage est dans l'état déverrouillé.

Selon une réalisation, le fond du logement est recouvert d'une couche d'un revêtement à faible coefficient de friction.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
- La figure 1 est une vue schématique de dessus d'une cabine d'un avion intégrant un arrangement d'unités de sièges selon la présente invention;
- La figure 2 est une vue en perspective de face d'une unité de siège selon la présente invention comportant un dispositif de fermeture;
- Les figures 3a et 3b sont des vues en perspective depuis un couloir de circulation de l'unité de siège selon la présente invention avec le dispositif de fermeture respectivement en position déployée et en position stockée;
- Les figures 4a et 4b sont des vues en perspective depuis un espace dans lequel est agencé l'unité de siège selon la présente invention avec le dispositif de fermeture respectivement en position déployée et en position stockée;
- La figure 5 est une vue en coupe transversale du dispositif de fermeture de l'unité de siège selon la présente invention;
- La figure 6 est une vue en coupe longitudinale du dispositif de fermeture de l'unité de siège selon la présente invention;
- Les figures 7a et 7b sont des vues en perspective d'un système de verrouillage du dispositif de fermeture respectivement dans un état verrouillé et dans un état déverrouillé;
- La figure 7c montre un positionnement d'une paroi de fermeture à l'intérieur d'un logement lorsque le système de verrouillage est dans un état déverrouillé;
- Les figures 8a et 8b sont des vues en perspective détaillées du système de verrouillage du dispositif de fermeture respectivement dans un état verrouillé et dans un état déverrouillé;
- Les figures 9a et 9b sont des vues en coupe longitudinale du dispositif de fermeture montrant une butée d'arrêt respectivement dans une position de blocage et une position de déblocage autorisant le déplacement de la paroi de fermeture; et
- Les figures 10a et 10b sont des vues en perspective détaillées d'un moyen de préhension permettant de commander le déplacement de la butée d'arrêt d'une position à une autre.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

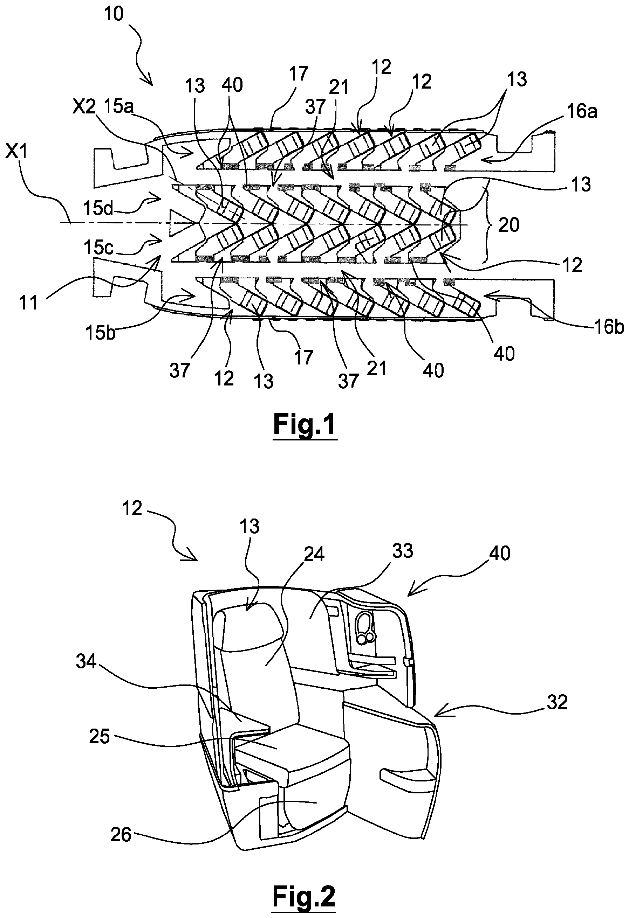

La figure 1 montre une cabine d'avion 10 s'étendant selon un axe longitudinal X1 comportant un arrangement de sièges 11. L'arrangement de sièges 11 selon la présente invention comprend une pluralité d'unités de sièges 12 comportant respectivement un siège individuel 13. Avantageusement, le siège 13 est apte à passer d'une position "assise", correspondant à la position utilisée notamment lors des phases d'arrêt, de décollage, et d'atterrissage de l'avion, et une position "couchée", dans laquelle le siège 13 définit un plan de couchage, avantageusement sensiblement horizontal pour le passager. En particulier, la position "assise" et la position "couchée" constituent des configurations du siège 13 dans deux positions extrêmes. Selon des variantes de réalisation, le siège 13 pourra également prendre des positions intermédiaires, dites positions "relax", entre ces deux positions extrêmes.

La pluralité d'unités de sièges 12 sont disposées selon au moins une rangée 15a s'étendant préférentiellement selon l'axe longitudinal X1 de la cabine d'avion 10. Selon l'exemple présenté sur la figure 1, la pluralité d'unités de sièges 12 sont disposées selon quatre rangées 15a, 15b, 15c et 15d.

Selon divers modes de réalisation particuliers, à l'intérieur de la rangée 15a, respectivement les rangées 15a, 15b, 15c et 15d, l'unité de sièges 12 peut être orientée de telle façon que le siège 13 soit tourné vers l'avant ou vers l'arrière de l'avion.

Il est à noter que, dans la suite de la description, les termes "avant" et "arrière" employés en relation avec l'expression "unité de siège" définissent localement une position relative du siège 13 à l'intérieur de la rangée 15a, respectivement les rangées 15a, 15b, 15c et 15d, et ne se réfèrent aucunement à une orientation du siège 13 à l'intérieur de la cabine d'avion 10. En d'autres termes, l'expression "unité de siège avant" signifie que l'unité de siège est positionnée directement devant une autre unité de siège à l'intérieur de la rangée, tandis que l'expression "unité de siège arrière" signifie que l'unité de siège est positionnée directement derrière une autre unité de siège à l'intérieur de la rangée selon l'axe longitudinal X1 de la cabine d'avion 10.

Selon l'exemple de réalisation présenté, l'arrangement de sièges 11 comporte deux groupes latéraux 16a, 16b comprenant des unités de sièges 12. Les deux groupes latéraux 16a, 16b sont constitués respectivement par deux rangées 15a, 15b d'unités de sièges 12 positionnées le long d'une paroi latérale 17 du fuselage de la cabine d'avion 10. L'arrangement de sièges 11 comporte également un groupe central 20. Le groupe central 20 est préférentiellement constitué de deux rangées 15c, 15d d'unités de sièges 12. Dans un tel agencement, les deux rangées 15c, 15d d'unités de sièges 12 sont avantageusement accolées latéralement l'une par rapport à l'autre.

Les groupes latéraux 16a, 16b sont respectivement séparés du groupe central 20 par un couloir de circulation 21. Selon la configuration présenté en figure 1, deux couloirs de circulation 21 sont donc prévus dans la cabine d'avion 10, spécifiquement entre chaque groupe latéral 16a, 16b et le groupe central 20. En variante, les deux groupes latéraux 16a, 16b pourront être formés chacun par plusieurs rangées d'unités de sièges 12.

Chaque siège 13 présente un axe d'extension X2 correspondant sensiblement à une direction d'extension longitudinale du siège 13. En particulier, l'axe d'extension X2 correspond à la direction d'extension longitudinale du siège 13 en position "couchée". Avantageusement, l'axe d'extension X2 forme un angle non nul avec à l'axe longitudinal X1 de la cabine d'avion 10.

Selon un agencement particulier, chaque siège 13 est tourné vers le couloir de circulation 21 adjacent à la rangée 15a, respectivement les rangées 15a, 15b, 15c et 15d. Ainsi agencé, chaque passager a un accès direct au couloir de circulation 21 depuis le siège 13. L'accès direct au couloir de circulation 21 est facilité par le fait que les pieds du passager se situent du côté du couloir de circulation 21.

De plus, dans le groupe central 20, idéalement, deux unités de sièges 12 sont disposées latéralement contigües l'une par rapport à l'autre. Avantageusement, les deux unités de sièges 12 ont des sièges 13 s'étendant suivant deux directions distinctes. Préférentiellement, les axes d'extension X2 respectifs des deux unités de sièges 12 forment un angle aigu entre eux. Une telle configuration est telle que les deux unités de sièges 12 forment un « V ». En particulier, une pointe de la forme en « V » des deux unités de sièges 12 est située derrière des dossiers 24 respectifs des deux unités de sièges 12.

L'optimisation de la densité de cabine d'avion 10 par rapport à une largeur de cette dernière est notamment possible en modifiant l'angle de l'axe d'extension X2 des sièges 13 par rapport à l'axe longitudinal X1 de la cabine d'avion 10. Selon divers modes de réalisation, les axes d'extension X2 des sièges 13 peuvent former sensiblement le même angle par rapport à l'axe longitudinal X1 de la cabine d'avion 10. De plus, les axes d'extension X2 de deux sièges 13 adjacents du groupe central 20 peuvent couper l'axe longitudinal X1 de la cabine d'avion 10 sensiblement en un même point. Alternativement, les deux sièges 13 latéralement adjacents peuvent être décalés l'un par rapport à l'autre selon l'axe longitudinal X1, de sorte que les axes d'extension X2 des deux sièges 13 latéralement adjacents coupent l'axe longitudinal X1 en des points différents.

Dans l'exemple représenté, les sièges 13 sont orientés vers l'avant de la cabine d'avion 10, c'est-à-dire en direction d'une zone comportant un cockpit de l'avion. Dans un mode de réalisation alternatif, les sièges 13 sont orientés vers l'arrière de la cabine d'avion 10, c'est-à-dire dans une direction opposée à la zone comportant le cockpit.

Comme cela est particulièrement illustré par la figure 2, chaque unité de siège 12 comporte un siège 13. Selon une forme avantageuse de réalisation, le siège 13 comprend un dossier 24, notamment réglable en inclinaison, et une assise 25, notamment potentiellement réglable en inclinaison. De plus, le siège 13 peut comprendre un repose-jambes 26, notamment réglable en inclinaison. De plus, l'unité de siège 12 peut comporter un repose-pieds. Selon une variante, le repose-pieds peut consister en un coussin fixe, notamment agencé dans un logement dédié à recevoir les pieds du passager. Alternativement, le repose-pieds peut consister en un élément situé à l'extrémité du repose-jambes 26.

L'unité de siège 12 peut également comporter un meuble latéral 32, susceptible notamment de servir de tablette fixe et/ou de rangement de tablette repas.

L'unité de siège 12 peut également comporter une coque fixe 33 apte à assurer une séparation. Une telle coque fixe 33 permet donc de garantir l'intimité de chaque passager. De façon avantageuse, afin de remplir une telle fonction de garantie d'intimité, la coque fixe 33 s'étend autour du dossier 24 du siège 13 afin de créer un espace intérieur, en tout ou partie clos, dans lequel est agencé le siège 13.

De plus, l'unité de siège 12 peut comprendre un accoudoir 34. L'accoudoir 34 peut être escamotable, de telle sorte qu'il est mobile entre une position "remontée", dans laquelle l'accoudoir 34 est apte à soutenir une partie du corps du passager, en particulier un bras du passager, et une position "stockée", dans laquelle l'accoudoir 34 est apte à être positionné au même niveau que l'assise 25 du siège 13, en particulier lorsque ce dernier est en position assise et/ou en position "couchée". Le passager pourra ainsi tirer profit de positions de confort en plaçant, par exemple, une partie de son corps, notamment une jambe, sur l'accoudoir 34 en position "stockée".

En outre, l'unité de siège 12 peut comporter éventuellement un coussin fixe (non représenté). En particulier, le coussin fixe permet une maximisation du couchage. A cet effet, il est avantageusement destiné à être positionné dans un prolongement du siège 13, notamment un prolongement latéral, lorsque ce dernier est en position "couchée".

Tel que visible notamment sur la figure 1, un passage 37, notamment un passage transversal 37, est ménagé entre deux unités de sièges 12 consécutives d'une rangée 15a, respectivement les rangées 15a, 15b, 15c et 15d, à savoir une unité de siège 12 "avant" et une unité de siège 12 "arrière". Plus spécifiquement selon l'exemple de réalisation présenté, le passage 37 s'étend entre l'unité de siège 12 "arrière" et l'unité de siège 12 "avant".

Le passage 37 est agencé de sorte à permettre une circulation du passager du siège 13 vers le couloir de circulation 21, notamment lorsque le siège 13 est en position "couchée".

Selon la présente invention, un dispositif de fermeture 40 est apte à assurer la fermeture du passage 37. Le dispositif de fermeture 40 permet ainsi de définir, notamment en coopération avec la coque fixe 33 de l'unité de sièges 12, un espace clos autour du siège 13.

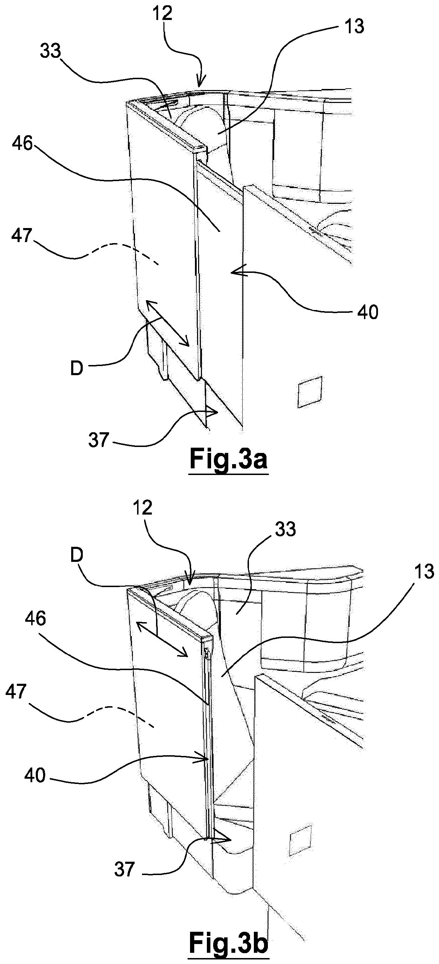

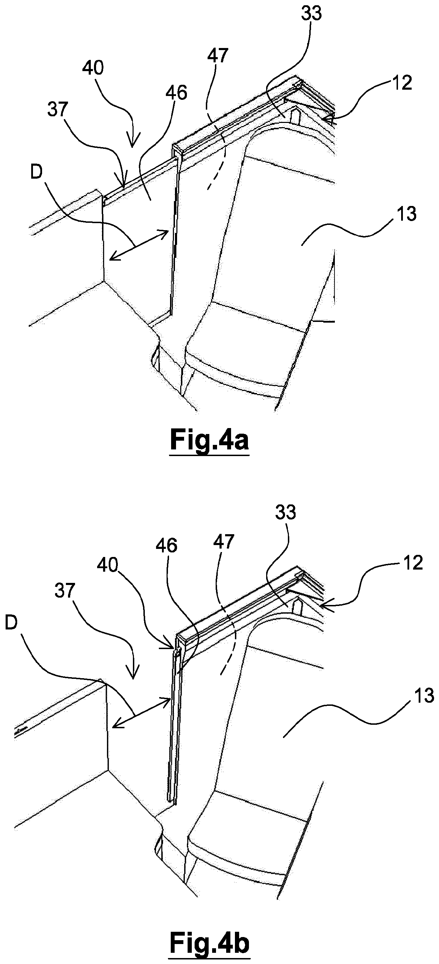

Lorsque le dispositif de fermeture 40 est déployé, tel que cela est illustré notamment sur les figures 3a et 4a, le passage 37 séparant deux unités de sièges 12 consécutives de la rangée 15a, respectivement les rangées 15a, 15b, 15c, 15d, est clos par le dispositif de fermeture 40. Le dispositif de fermeture 40 est susceptible de se déplacer selon une direction de coulissement D, avantageusement une direction de coulissement D rectiligne.

En conséquence, le passager assis dans le siège 13 est séparé de tout passager et/ou personnel de bord marchant dans le couloir de circulation 21 par le dispositif de fermeture 40, apte à coopérer avec la coque fixe 33 s'étendant autour du siège 13. Le passager se retrouve ainsi assis dans une zone d'intimité définie par l'espace clos ainsi créé.

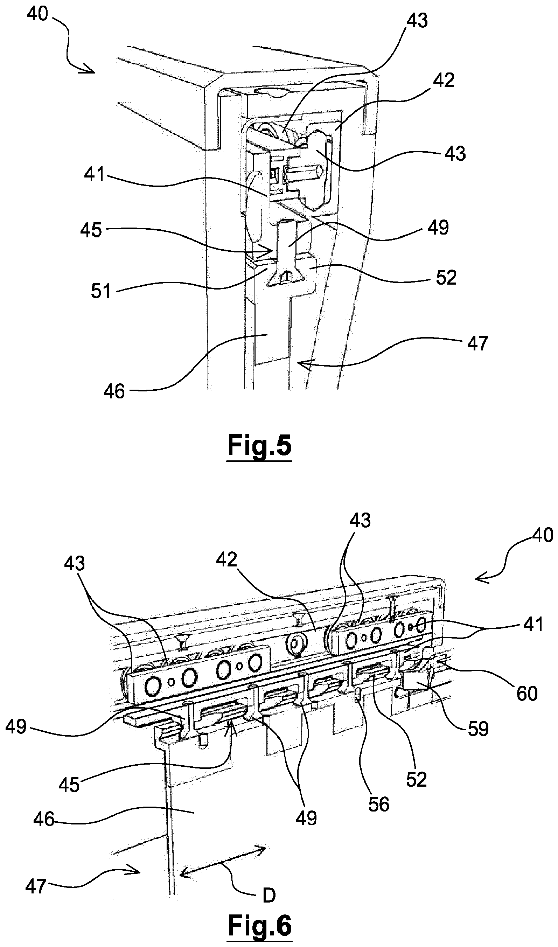

Plus précisément, comme on peut le voir sur les figures 5 et 6, le dispositif de fermeture 40 comporte un moyen de support 41, ledit moyen de support 41 étant un chariot, apte à coulisser le long d'une glissière 42 suivant la direction de coulissement D. A cet effet, le moyen de support 41 peut, par exemple, comporter des roues 43 coopérant avec la glissière 42.

Un système de verrouillage 45 est monté entre le moyen de support 41 et une paroi de fermeture 46. Sur les figures 5 et 6, la paroi de fermeture 46 est représentée disposée à l'intérieur d'un logement 47.

Le système de verrouillage 45 est apte à prendre un état verrouillé, dans lequel le système de verrouillage 45 assure une liaison mécanique entre la paroi de fermeture 46 et le moyen de support 41. La paroi de fermeture 46 est alors mobile, avec le moyen de support 41, suivant la direction de coulissement D, entre une position stockée et une position déployée.

Dans la position stockée, la paroi de fermeture 46 est située majoritairement à l'intérieur du logement 47. Dans un tel agencement, la paroi de fermeture 46 est susceptible de dégager, au moins selon une portion majoritaire, le passage 37, tel que montré sur les figures 3b et 4b. Dans la position déployée, la paroi de fermeture 46 est située majoritairement à l'extérieur du logement 4. Dans un tel agencement, la paroi de fermeture 46 est susceptible d'obturer, au moins selon une portion majoritaire, le passage 37, tel que montré sur les figures 3a et 4a.

En cas de dysfonctionnement du moyen de support 41, la présente invention prévoit que le système de verrouillage 45 est apte à prendre un état déverrouillé, dans lequel la paroi de fermeture 46 est susceptible d'être désolidarisée du moyen de support 41, de sorte que la paroi de fermeture 46 est seule mobile, suivant la direction de coulissement D, entre la position déployée et la position stockée.

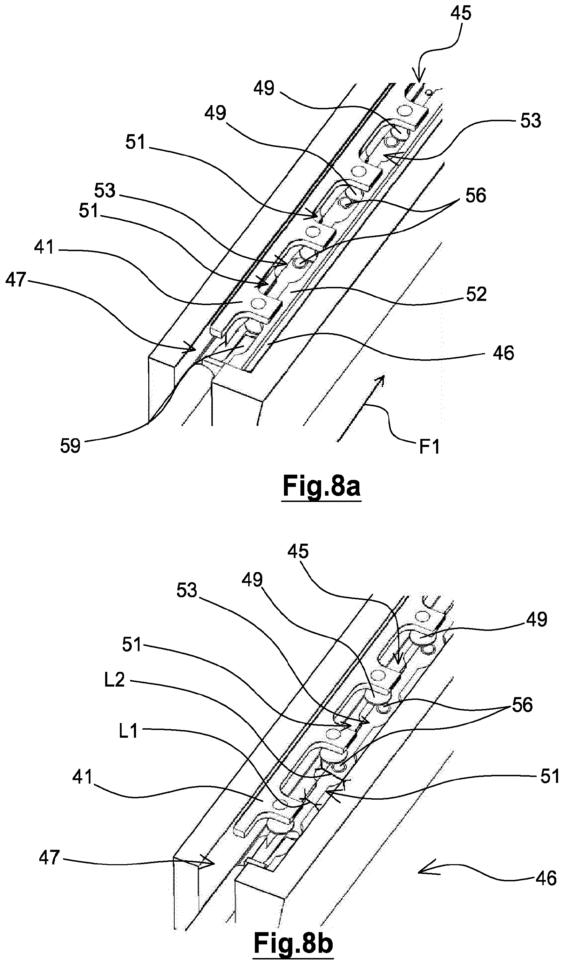

A cet effet, comme on peut le voir notamment sur les figures 6, 8a et 8b, le système de verrouillage 45 comporte des plots 49, munis respectivement d'une tête en saillie. Les plots 49 pourront, par exemple, être constitués par des vis.

Les plots 49 sont aptes à coopérer, d'une part, avec des zones de maintien 51 ménagées dans des rails 52, lorsque le système de verrouillage 45 est à l'état verrouillé, et, d'autre part, avec des zones de dégagement 53 ménagées dans les rails 52, lorsque le système de verrouillage 45 est à l'état déverrouillé.

Comme cela est visible sur la figure 8b, dans les zones de maintien 51, un écart L1 entre les rails 52 est inférieur au diamètre maximal des têtes de plots 49, de sorte que la paroi de fermeture 46 est soutenue par les plots 49.

Dans les zones de dégagement 53, un écart entre les rails 52 est supérieur au diamètre des têtes de plots 49, de sorte qu'un espace est créé permettant aux têtes de plots 49 de passer pour désolidariser la paroi de fermeture 46 par rapport au moyen de support 41.

Selon un exemple de réalisation, tel que présenté en figure 5, la tête des plots 49 coopère avec un espace d'accueil disposé sous les rails 52 par complémentarité de forme, ici tronconique.

Dans l'exemple représenté, les rails 52 sont disposés sur la paroi de fermeture 46 et les plots 49 sont disposés sur le moyen de support 41. Plus précisément, les rails 52 sont disposés sur le bord supérieur de la paroi de fermeture 46.

Bien entendu, la structure selon la présente invention pourra être inversée, en ce sens que les rails 52 pourront être disposés sur le moyen de support 41 et les plots 49 pourront être disposés sur la paroi de fermeture 46.

En outre, comme on peut le voir notamment sur les figures 8a et 8b, le système de verrouillage 45 comporte au moins un organe de retenue 56 disposé entre une zone de maintien 51 et une zone de dégagement 53. L'organe de retenue 56 permet ainsi d'éviter un déplacement intempestif de la paroi de fermeture 46 par rapport au moyen de support 41. En l'occurrence, on prévoit avantageusement plusieurs organes de retenue 56 disposés dans les espaces d'accueil des têtes de plots 49.

Les organes de retenue 56 présentent avantageusement un seuil d'effort de retenue supérieur à un effort nécessaire pour déplacer la paroi de fermeture 46 et le moyen de support 41 le long de la glissière 42, lorsque le système de verrouillage 45 est à l'état verrouillé.

Le seuil d'effort de retenue est compris par exemple entre 15 et 60 Newtons. Un tel seuil d'effort permet d'assurer le passage du système de verrouillage 45 de l'état verrouillé à l'état déverrouillé, sans trop de difficulté, en cas d'action d'un utilisateur sur la paroi de fermeture 46.

Dans un exemple particulier de réalisation représenté, l'organe de retenue 56 est constitué par une bille montée sur un ressort. Le seuil d'effort de retenue pourra être adapté par ajustement du tarage du ressort. En variante, l'organe de retenue 56 pourra être constitué par un élément mécanique sécable sous un certain effort, tel qu'une languette sécable sous l'action d'un effort exercé par l'utilisateur.

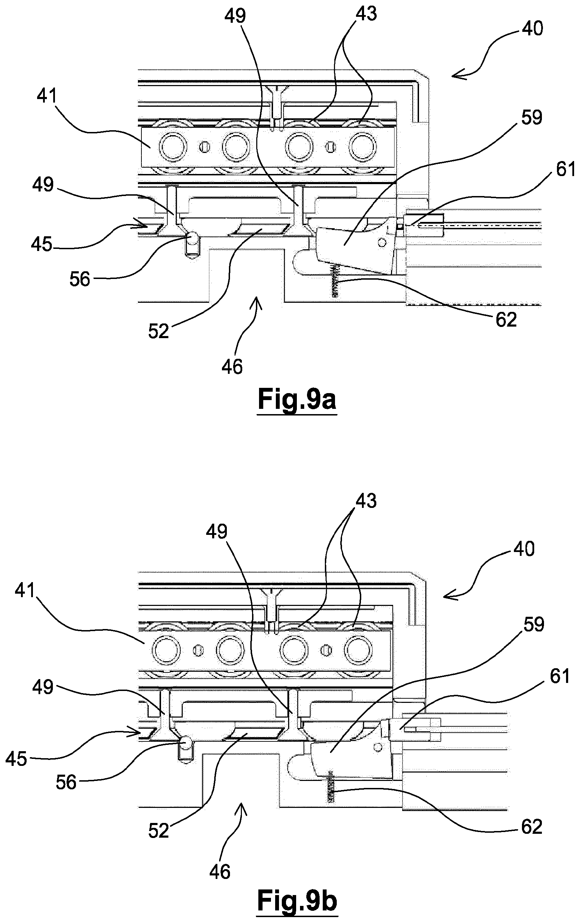

De façon optionnelle, une butée d'arrêt 59 pourra être prévue dans la paroi de fermeture 46, tel que cela est illustré notamment sur les figures 6, 9a, et 9b. La butée d'arrêt 59 est apte à prendre
- une position de blocage, dans laquelle la butée d'arrêt 59 vient en appui contre une partie fixe par rapport au moyen de support 41 pour éviter un déplacement relatif de la paroi de fermeture 46 par rapport au moyen de support 41 (comme on peut le voir notamment sur la figure 9a) et
- une position de déblocage, dans laquelle la butée d'arrêt 59 est dégagée de la partie fixe par rapport au moyen de support 41 pour autoriser un déplacement relatif de la paroi de fermeture 46 par rapport au moyen de support 41 (comme on peut le voir notamment sur la figure 9b).

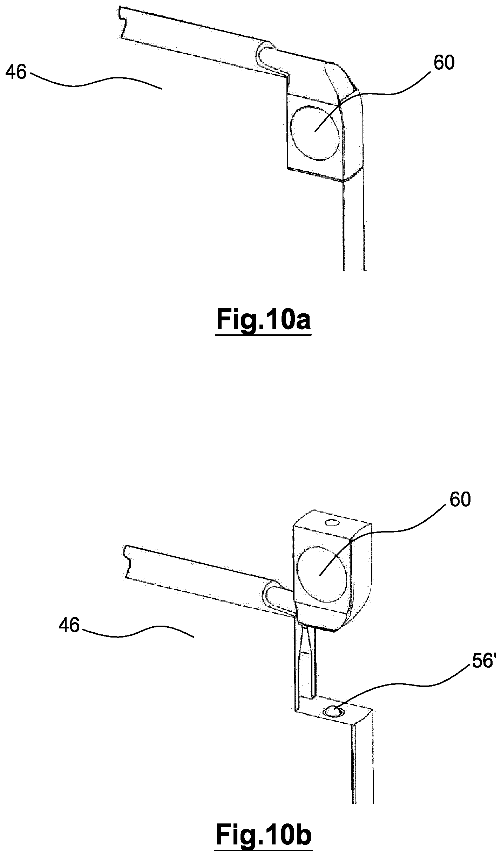

Comme montré sur les figures 10a et 10b, un moyen de préhension 60 est apte à commander le passage de la butée d'arrêt 59 de la position de blocage à la position de déblocage. Le moyen de préhension 60 est, par exemple, situé sur un coin de la paroi de fermeture 46 et peut, par exemple être constitué par une poignée, notamment une poignée rotative, reliée à un axe d'actionnement 61 de la butée d'arrêt 59.

Comme on peut le voir sur les figures 9a et 9b, un organe élastique, tel qu'un ressort 62, sollicite la butée d'arrêt 59 en position de blocage. Lorsque la poignée 60 est actionnée, l'axe d'actionnement 61 pousse la butée d'arrêt 59, de sorte que cette la butée d'arrêt 59 comprime le ressort 62 pour entrer à l'intérieur de son logement et passer en position de déblocage autorisant le déplacement de la paroi de fermeture 46 par rapport au moyen de support 41.

Le maintien de la poignée 60 en position repos pourra être réalisé au moyen d'une bille de verrouillage 56', en particulier analogue à celle utilisée dans le système de verrouillage 45, tel que montré sur la figure 10b.

On décrit ci-après l'utilisation du dispositif de fermeture 40 d'une unité de siège selon l'invention. En fonctionnement normal, le système de verrouillage 45 est dans un état verrouillé, de sorte que l'utilisateur peut aisément faire passer la paroi de fermeture 46 d'une position extrême, correspondant à la position stockée ou la position déployée, de la paroi de fermeture 46 à l'autre du fait du guidage de la paroi de fermeture 46 par le moyen de support 41 qui peut coulisser suivant la glissière 42, tel que montré sur les figures 3a, 3b, 4a, 4b.

Lorsque des conditions d'urgence nécessitent l'évacuation de l'avion et/ou que le moyen de support 41 ne fonctionne plus correctement, l'utilisateur peut manœuvrer le moyen de préhension 60 pour faire passer la butée d'arrêt 59 de la position de blocage à la position de déblocage, tel que cela est illustré sur les figures 9a et 9b. Cela permet d'autoriser le déplacement relatif de la paroi de fermeture 46 par rapport au moyen de support 41.

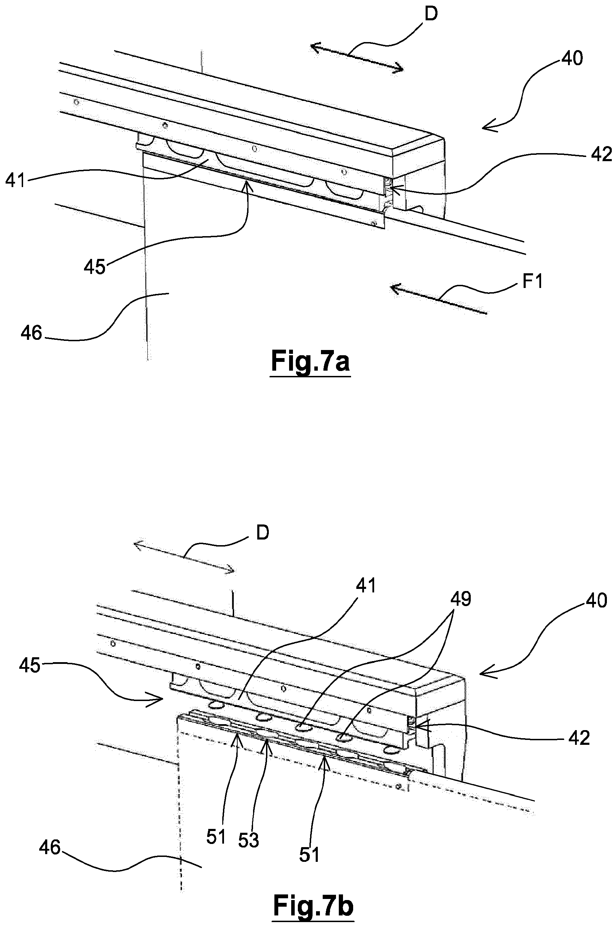

L'utilisateur passager peut alors exercer un effort de poussée F1 sur la paroi de fermeture 46 vers l'intérieur du logement 47. Lorsque l'effort de poussée F1 dépasse l'effort de l'organe de retenue 56, les têtes des plots 49 compriment les ressorts, de sorte que les organes de retenue 56 se rétractent à l'intérieur de leur logement pour autoriser le mouvement de la paroi de fermeture 46 par rapport au moyen de support 41. La paroi de fermeture 46 peut alors être déplacée jusqu'à ce que les zones de dégagement 53 se retrouvent en face des têtes de plots 49, tel que cela est montré sur les figures 7a, 7b, 8a et 8b.

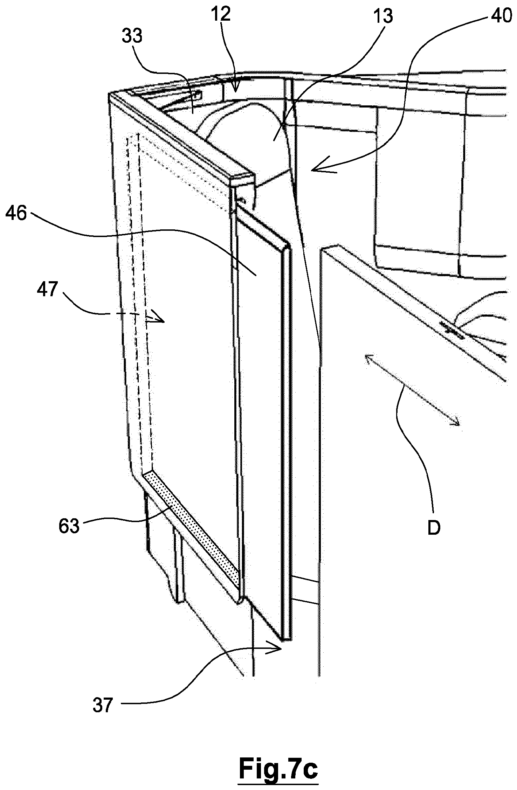

La paroi de fermeture 46 se désolidarise alors du moyen de support 41 et vient en appui par gravité contre le fond du logement 47, tel que cela est montré sur la figure 7c. Le système de verrouillage 45 est alors dans l'état déverrouillé.

L'utilisateur peut alors faire glisser la paroi de fermeture 46 seule contre le fond du logement 47 suivant la direction de coulissement D pour la faire passer en position stockée à l'intérieur du logement 47.

Avantageusement, le fond du logement 47 est recouvert d'une couche 63 d'un revêtement à faible coefficient de friction. Ce revêtement pourra par exemple être constitué de teflon, thermoplastique, ou aluminium/inox avec un état de surface lisse.

Il est à noter que la présente invention est réversible, en ce sens que par, une opération inverse, il est possible de remonter la paroi de fermeture 46 sur le moyen de support 41. Ainsi, pour repasser le système de verrouillage 45 en position verrouillée, les zones de dégagement 53 sont mises en regard des plots 49. Puis, par un mouvement vertical vers le haut suivi d'un mouvement suivant la direction de coulissement D, par exemple vers l'extérieur du logement 47, les plots 49 viennent coopérer avec les zones de maintien 51. En outre, en exerçant un effort supérieur à l'effort de retenue, les plots 49 passent par-dessus les organes de retenue 56, de sorte que la paroi de fermeture 46 se solidarise avec le moyen de support 41. La butée d'arrêt 59 pourra alors repasser dans une position de blocage.

Par ailleurs, la butée d'arrêt 59 et les organes de retenue 56 peuvent être utilisés indépendamment l'un de l'autre. Ainsi, dans une variante de réalisation, il sera possible de supprimer la présence de la butée d'arrêt 59. Alternativement, il est également possible de faire appel uniquement à la butée d'arrêt 59 sans prévoir d'organes de retenue 56.

Bien évidemment, l'invention définie par les revendications n'est pas limitée aux modes de réalisation décrits précédemment et fournis uniquement à titre d'exemple.

## Revendications

1. Unité de siège comportant:
- au moins un logement (47) et pourvu d'un dispositif de fermeture (40), notamment d'un passage (37) ménagé dans une cabine d'un aéronef, comportant:
- un moyen de support (41), apte à coulisser le long d'une glissière (42) suivant une direction de coulissement (D), ledit moyen de support (41) étant un chariot,
- une paroi de fermeture (46) apte à obturer le passage (37), ladite paroi de fermeture (46), dans une position stockée, étant disposée à l'intérieur du logement (47) et
- un système de verrouillage (45), apte à prendre un état verrouillé, dans lequel le système de verrouillage (45) assure une liaison mécanique entre la paroi de fermeture (46) et le moyen de support (41), de sorte que la paroi de fermeture (46) est mobile avec le moyen de support (41), suivant la direction de coulissement (D),
**caractérisée en ce que**, en cas de dysfonctionnement, le système de verrouillage (45) est apte à passer dans un état déverrouillé, dans lequel la paroi de fermeture (46) est désolidarisée du moyen de support (41), de sorte que la paroi de fermeture (46) est seule mobile, suivant la direction de coulissement (D),
- ledit système de verrouillage (45) comportant une pluralité de plots (49) munis respectivement d'une tête,
- lesdits plots (49) étant aptes à coopérer:
• avec des zones de maintien (51) lorsque le système de verrouillage (45) est à l'état verrouillé, et
• avec des zones de dégagement (53) lorsque le système de verrouillage (45) est à l'état déverrouillé,
- les zones de maintien (51) et les zones de dégagement (53) étant ménagées dans des rails (52),
- lesdits rails (52) étant disposés sur la paroi de fermeture (46) et lesdits plots (49) étant disposés sur le moyen de support (41), ou inversement.

2. Unité de siège selon la revendication 1, **caractérisée en ce que** le système de verrouillage (45) comporte au moins un organe de retenue (56) disposé entre la zone de maintien (51) et la zone de dégagement (53).

3. Unité de siège selon la revendication 2, **caractérisée en ce que** l'organe de retenue (56) présente un seuil d'effort de retenue supérieur à un effort nécessaire pour déplacer la paroi de fermeture (46) et/ou le moyen de support (41) suivant la glissière (42) lorsque le système de verrouillage (45) est à l'état verrouillé.

4. Unité de siège selon la revendication 2 ou 3, **caractérisée en ce que** l'organe de retenue (56) est constitué par une bille montée sur un ressort.

5. Unité de siège selon l'une quelconque des revendications 1 à 4, **caractérisée en ce qu'**une butée d'arrêt (59) est prévue dans la paroi de fermeture (46).

6. Unité de siège selon la revendication 5, **caractérisée en ce que** la butée d'arrêt (59) est apte à prendre
• une position de blocage, dans laquelle la butée d'arrêt (59) vient en appui contre une partie fixe par rapport au moyen de support (41) pour éviter un déplacement relatif de la paroi de fermeture (46) par rapport au moyen de support (41), et
• une position de déblocage, dans laquelle la butée d'arrêt (59) est dégagée de la partie fixe par rapport au moyen de support (41) pour autoriser un déplacement relatif de la paroi de fermeture (46) par rapport au moyen de support (41).

7. Unité de siège selon la revendication 5 ou 6, **caractérisée en ce qu'**un moyen de préhension (60), notamment une poignée, en particulier situé sur un coin de la paroi de fermeture (46), est apte à commander un déplacement de la butée d'arrêt (59).

8. Unité de siège (12) selon la revendication 1, **caractérisée en ce que** la paroi de fermeture (46) est apte à venir en appui par gravité contre un fond du logement (47) lorsque le système de verrouillage (45) est dans l'état déverrouillé.

9. Unité de siège (12) selon la revendication 8, caractériséd en ce que le fond du logement (47) est recouvert d'une couche (63) d'un revêtement à faible coefficient de friction.

## Patentansprüche

1. Sitzeinheit mit:
- wenigstens einem Gehäuse (47) und einer Schließvorrichtung (40), insbesondere für einen Durchgang (37) in einer Kabine eines Flugzeugs, umfassend:
- ein Stützmittel (41), die entlang einer Gleitschiene (42) entlang einer Gleitrichtung (D) verschieben kann, wobei das Stützmittel (41) ein Schlitten ist,
- eine Schließwand (46), die den Durchgang (37) schließen kann, wobei in der verstauten Stellung die Schließwand (46) innerhalb des Gehäuses (47) angeordnet ist, und
- ein Verriegelungssystem (45), das in einen verriegelten Zustand gelangen kann, in dem das Verriegelungssystem (45) eine mechanische Verbindung zwischen der Schließwand (46) und dem Stützmittel (41) herstellt, so dass die Schließwand (46) zusammen mit dem Stützmittel (41) entlang der Gleitrichtung (D) beweglich ist,
**dadurch gekennzeichnet, dass** im Fehlerfall das Verriegelungssystem (45) in einen entriegelten Zustand gelangen kann, in dem die Verschlusswand (46) von dem Stützmittel (41) getrennt ist, so dass nur die Schließwand (46) entlang der Gleitrichtung (D) beweglich ist, wobei
- das Verriegelungssystem (45) mindestens mehrere jeweils mit einem Kopf versehenden Bolzen (49) aufweist,
- die Bolzen (49) mit
• Haltezonen (51), wenn sich das Verriegelungssystem (45) im verriegelten Zustand befindet, und
• Freiraumzonen (53), wenn sich das Verriegelungssystem (45) im entriegelten Zustand befindet, zusammenarbeiten kann,
- die Haltezonen (51) und/oder die Freiraumzonen (53) in Schienen (52) vorgesehen sind,
- die Schienen (52) an der Schließwand (46) und die Bolzen (49) am Stützmittel (41) angeordnet sind, oder umgekehrt.

2. Sitzeinheit nach Anspruch 1, **dadurch gekennzeichnet, dass** das Verriegelungssystem (45) mindestens ein Halteelement (56) umfasst, das zwischen der Haltezone (51) und der Freiraumzone (53) angeordnet ist.

3. Sitzeinheit nach Anspruch 2, **dadurch gekennzeichnet, dass** das Halteelement (56) eine Haltekraftschwelle aufweist, die größer als eine notwendige Kraft für die Bewegung der Schließwand (46) und/oder das Stützmittel (41) entlang den Gleitschiene (42) ist, wenn sich das Verriegelungssystem (45) im verriegelten Zustand befindet.

4. Sitzeinheit nach Anspruch 2 oder 3, **dadurch gekennzeichnet, dass** das Halteelement (56) eine auf einer Feder montierte Kugel umfasst.

5. Sitzeinheit nach einem der Ansprüche 1 bis 4, **dadurch gekennzeichnet, dass** in der Schließwand (46) ein Anschlag (59) vorgesehen ist.

6. Sitzeinheit nach Anspruch 5, **dadurch gekennzeichnet, dass** der Anschlag (59)
• eine Blockierposition, in der der Anschlag (59) an einem festen Teil relativ zum Stützmittel (41) anliegt, um eine Relativbewegung der Schließwand (46) relativ zum Stützmittel (41) zu verhindern, und
• eine Entriegelungsposition, in der der Anschlag (59) vom festen Teil relativ zum Stützmittel (41) gelöst ist, um eine Relativbewegung der Schließwand (46) relativ zum Stützmittel (41) zu ermöglichen, einnehmen kann.

7. Sitzeinheit nach Anspruch 5 oder 6, **dadurch gekennzeichnet, dass** ein Greifmittel (60), insbesondere ein Griffstück, welches insbesondere an einer Ecke der Schließwand (46) angeordnet ist, eine Bewegung des Anschlag (59) steuern kann.

8. Sitzeinheit (12) nach Anspruch 1, **dadurch gekennzeichnet, dass** die Verschlusswand (46) aufgrund der Schwerkraft auf einem Boden des Gehäuses (47) aufliegen kann, wenn sich das Verriegelungssystem (45) im entriegelten Zustand befindet.

9. Sitzeinheit (12) nach Anspruch 8, **dadurch gekennzeichnet, dass** der Boden des Gehäuses (47) mit einer Schicht (63) einer Abdeckung mit einem niedrigen Reibungskoeffizienten bedeckt ist.

## Claims

1. A seat unit comprising:
- at least a housing (47) and provided with a closing device (40), in particular for a passage (37) in a cabin of an aircraft, comprising:
- a support means (41) capable of sliding along a slide (42) along a sliding direction (D), said support means (41) being a carriage,
- a closing wall (46) capable of closing the passage (37), said closing wall (46), in the stored position, being arranged inside the housing (47) and
- a locking system (45) capable of coming into a locked state, in which the locking system (45) provides a mechanical connection between the closing wall (46) and the support means (41), so that the closing wall (46) is movable together with the support means (41) along the sliding direction (D),
**characterized in that**, in the event of a failure, the locking system (45) is capable of coming into an unlocked state, in which the closing wall (46) is separated from the support means (41), so that only the closing wall (46) is movable along the sliding direction (D),
- the locking system (45) comprising a plurality of studs (49), each being provided with a head,
- said studs being capable of cooperating with
• holding zones (51) when the locking system (45) is in the locked state and
• clearance zones (53) when the locking system (45) is in the unlocked state,
- the holding zones (51) and/or the clearance zones (53) being provided in rails (52),
- said rails (52) being arranged on the closing wall (46) and said stud (49) being arranged on the support means (41), or conversely.

2. The seat unit (40) according to claim 1, **characterized in that** the locking system (45) comprises at least one retaining member (56) arranged between the retaining zone (51) and the clearance zone (53).

3. The seat unit (40) according to claim 2, **characterized in that** the retaining member (56) has a retaining force threshold greater than a force necessary to move the closing wall (46) and/or the support means (41) along the slide (42) when the locking system (45) is in the locked state.

4. The seat unit (40) according to claim 2 or 3, **characterized in that** the retaining member (56) comprises a ball mounted on a spring.

5. The seat unit (40) according to any one of the claims 1 to 4, **characterized in that** a stop (59) is provided in the closing wall (46).

6. The seat unit (40) according to claim 5, **characterized in that** the stop (59) is capable of coming into
• a blocking position, in which the stop (59) bears against a fixed part relative to the support means (41) so as to prevent a relative movement of the closing wall (46) relative to the support means (41), and
• an unblocking position, in which the stop (59) is released from the fixed part relative to the support means (41) so as to allow a relative movement of the closing wall (46) relative to the support means (41).

7. The seat unit (40) according to claim 5 or 6, **characterized in that** a gripping means (60), notably a handle, in particular located on a corner of the closing wall (46), is capable of controlling a movement of the stop (59).

8. Seat unit (12) according to claim 1, **characterized in that** the closing wall (46) is capable of bearing on a bottom of the housing (47) due to gravity, when the locking system (45) is in the unlocked state.

9. Seat unit (12) according to claim 8, **characterized in that** the bottom of the housing (47) is covered by a layer (63) of a covering having a low coefficient of friction.
